# FASCICULE DE BREVET EUROPEEN

(11) **EP 3 487 364 B1**
(45) Date de publication et mention de la délivrance du brevet: **30.09.2020**
(21) Numéro de dépôt: 17754749.4
(22) Date de dépôt: 21.07.2017
(51) Int. Cl.: A47J 27/04

(54) **PANIER À VAPEUR ET CUISEUR ÉLECTRIQUE**
DAMPFKORB UND ELEKTRISCHER KOCHER
STEAMER BASKET AND ELECTRIC COOKER

(30) Priorité: 22.07.2016 FR 1657071
(43) Date de publication de la demande: 29.05.2019
(73) Titulaire: SEB S.A., 69130 Ecully (FR)
(72) Inventeur: LV, Hua, Hangzhou Zhejiang 310051 (CN); MA, Chao, Hangzhou Zhejiang 310051 (CN)
(74) Mandataire: SEB Developpement Brevets
(86) Numéro de dépôt international: PCT/FR2017/052025
(87) Numéro de publication internationale: WO 2018/015696

(56) Documents cités:
- EP-A1- 2 883 482
- WO-A1-2012/007690
- WO-A1-2014/184479
- US-B1- 6 840 159

## Description

La présente invention concerne le domaine de la cuisson des aliments, il concerne concrètement un panier à vapeur et un cuiseur électrique.

Il est connu du document EP2883482A1 un cuiseur électrique comportant un panier à vapeur qui comprend un cylindre de remplissage, lequel cylindre de remplissage comportant une chambre de remplissage, et la paroi du fond du cylindre de remplissage étant pourvue d'un mécanisme d'ouverture, installé sur la chambre de remplissage se trouvant une plaque perméable, laquelle plaque perméable comportant une zone perméable, laquelle zone perméable étant percée de plusieurs trous de passage de vapeur qui traversent la plaque perméable, et entre ladite plaque perméable et la paroi du fond du cylindre de remplissage se trouvant une cavité de passage de vapeur, ledit mécanisme d'ouverture et ladite cavité de passage de vapeur étant reliés.

Les cuiseurs électriques pour cuire le riz, comme les cuiseurs à riz actuels, comportent un récipient interne à l'intérieur duquel est disposé un panier à vapeur, le riz est placé dans le panier à vapeur, l'eau dans le récipient interne. On chauffe le récipient interne afin de porter l'eau se trouvant dans le récipient interne à ébullition pour qu'elle pénètre dans le panier à vapeur et vienne rincer le riz, ceci jusqu'à ce que le niveau de l'eau baisse en-dessous du panier à vapeur. On procède ensuite à la séparation du riz et de l'eau. Puis, on continue de chauffer, et on emploie la vapeur générée pour cuire le riz à la vapeur. L'eau du rinçage aura emporté une partie du sucre contenu dans le riz avec l'eau de riz ce qui permettra d'obtenir un riz cuit à faible teneur en sucre.

L'utilisation des paniers à vapeur existant actuellement présente certains inconvénients, lesquels inconvénients viennent de ce qu'ils utilisent uniquement de l'eau bouillante, ce qui est peu favorable au contact entier de l'eau et du riz. La méthode dans laquelle l'eau entre dans le panier à vapeur pour venir rincer le riz ou faire en sorte que le riz absorbe l'eau ne permet pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte en définitive la texture en bouche du riz obtenu. En outre, les structures actuelles de panier à vapeur ne permettent pas non plus de garantir la bonne réalisation du processus de séparation de l'eau et du riz, ce qui rend difficile l'obtention d'un riz à indice glycémique (IG) (sucre) bas.

L'objectif de la présente invention est de fournir un panier vapeur et un cuiseur électrique permettant de résoudre les difficultés techniques des cuiseurs électriques actuels de réalisation stable du processus de contact de l'eau et du riz ou de séparation de l'eau et du riz, qui entraînent l'impossibilité de cuire un riz à indice glycémique (IG) bas.

Cet objectif est atteint par l'intermédiaire d'un panier à vapeur comprenant :
- un cylindre de remplissage, lequel cylindre de remplissage comporte une chambre de remplissage, et la paroi du fond du cylindre de remplissage est pourvue d'un mécanisme d'ouverture,
- installé sur la chambre de remplissage se trouve une plaque perméable, laquelle plaque perméable comporte une zone perméable, laquelle zone perméable est percée de plusieurs trous de passage de l'eau qui traversent la plaque perméable, et entre ladite plaque perméable et la paroi du fond du cylindre de remplissage se trouve une cavité de passage de l'eau, ledit mécanisme d'ouverture et ladite cavité de passage de l'eau sont reliés.

Selon une autre variante de réalisation, le cylindre de remplissage comporte une structure entretoisée, la plaque perméable est soutenue à l'intérieur de la chambre de remplissage par cette structure entretoisée, et un intervalle existe entre la plaque perméable et la paroi du fond, tous les trous de passage de l'eau de la zone perméable sont reliés à la cavité de passage de l'eau.

Selon une autre variante de réalisation, la paroi du cylindre de remplissage comporte :
- une paroi latérale,
- la paroi du fond,
- une paroi crénelée destinée à relier la paroi latérale à la paroi du fond, laquelle paroi crénelée forme ladite structure entretoisée et laquelle paroi crénelée comprend une section horizontale et une section verticale interconnectées, laquelle section horizontale est connectée au fond de la paroi latérale, et le fond de ladite section verticale est connectée à la paroi du fond et la plaque perméable repose sur ladite section horizontale.

Selon une autre variante de réalisation, la structure entretoisée est installée de façon protubérante sur la surface interne de la paroi latérale du cylindre de remplissage, et la plaque perméable est installée sur ladite structure entretoisée.

Selon une autre variante de réalisation, la plaque perméable présente une structure plane ou une structure incurvée.

Selon une autre variante de réalisation, la plaque perméable présente une structure incurvée, et ladite plaque perméable est installée avec un côté bombé vers ou en direction opposée à la paroi du fond.

Selon une autre variante de réalisation, la plaque perméable comporte une zone centrale située au centre de la plaque perméable et une zone périphérique située autour de cette zone centrale, avec un côté de la zone centrale bombé en direction opposée à la paroi du fond et un côté de la zone périphérique bombé vers la paroi du fond.

Selon une autre variante de réalisation, le mécanisme d'ouverture présente une forme tubulaire droite ou une forme conique.

Selon une autre variante de réalisation, le mécanisme d'ouverture est installé sur les orifices du couvercle de fond.

Selon une autre variante de réalisation, le rapport de la surface d'ouverture du mécanisme d'ouverture et la section transversale de la chambre de remplissage du cylindre de remplissage est supérieur ou égal à 0,05 et inférieur ou égal à 1,5.

Selon une autre variante de réalisation, le rapport de la surface d'ouverture du mécanisme d'ouverture et la section transversale de la chambre de remplissage du cylindre de remplissage est supérieur ou égal à 0,3 et inférieur ou égal à 0,8.

Selon une autre variante de réalisation, le mécanisme d'ouverture présente une symétrie axiale avec la projection orthogonale de la plaque perméable.

Selon une autre variante de réalisation, la paroi du fond présente une surface incurvée, un côté de la paroi du fond étant bombé dans la direction opposée à la plaque perméable de la chambre de remplissage, et le mécanisme d'ouverture étant situé au centre géométrique de la paroi du fond.

Selon une autre variante de réalisation, le panier à vapeur comporte plusieurs renforcements, lesquels renforcements sont situés sur la surface du côté de la paroi du fond opposé à la chambre de remplissage et dans le prolongement du rayon de la paroi du fond, et lesdits renforcements sont situés de part et d'autre du mécanisme d'ouverture et séparés les uns des autres par celui-ci.

Selon une autre variante de réalisation, les trous de passages de l'eau sont de forme ronde, ovale, de noix de cajou ou polygonale, tous les trous étant de la même forme ou bien mêlant plusieurs de ces formes.

L'invention concerne également un cuiseur électrique comportant :
- un boîtier externe,
- un récipient interne disposé à l'intérieur du boîtier externe,
- un panier à vapeur tel que défini précédemment, lequel panier à vapeur est installé à l'intérieur du récipient interne, la partie supérieure du cylindre de remplissage de ce panier à vapeur étant hermétiquement abouchée à l'ouverture du récipient interne.

Selon une autre variante de réalisation, un joint d'étanchéité est placé entre la partie supérieure du cylindre de remplissage du panier à vapeur et l'ouverture du récipient interne.

Selon une autre variante de réalisation, le rapport entre la hauteur allant du mécanisme d'ouverture du cylindre de remplissage du panier à vapeur jusqu'au fond du récipient interne et la profondeur du récipient interne est supérieur ou égal à 0,1 et inférieur ou égal à 0,8.

Selon une autre variante de réalisation, la plaque perméable du panier à vapeur présente une structure plate ou incurvée, et le rapport entre la hauteur allant de l'ouverture du mécanisme d'ouverture jusqu'au point le plus bas de la plaque perméable et la profondeur H du récipient interne est supérieur ou égal à 0,1 et inférieur ou égal à 0,8.

Selon une autre variante de réalisation, la plaque perméable du panier à vapeur présente une structure plate ou incurvée, et le rapport entre la hauteur allant du point le plus bas de la plaque perméable jusqu'au bord supérieur du récipient interne et la profondeur du récipient interne est supérieur ou égal à 0,1 et inférieur ou égal à 0,8.

Selon l'invention, on a une plaque perméable installée à l'intérieur de la chambre de remplissage du panier à vapeur, et cette plaque perméable comporte une zone perméable. L'eau se trouvant à l'intérieur du récipient interne est, sous l'action de la pression, envoyée à travers les trous de passage de l'eau de cette zone perméable jusque dans la chambre de remplissage ou évacuée hors de la chambre de remplissage, de cette manière on peut ainsi réaliser de manière répétée le trempage et le rinçage du riz à l'intérieur de la chambre de remplissage, ceci afin de réduire la teneur en sucre du riz.

Après avoir placé le cylindre de remplissage dans le récipient interne, la partie supérieure du cylindre de remplissage est hermétiquement abouchée à l'ouverture du récipient interne. Dans une phase préliminaire, le niveau de l'eau se trouvant à l'intérieur du récipient interne est supérieur au mécanisme d'ouverture de la paroi du fond du cylindre de remplissage, de sorte à former un espace hermétique entre le cylindre de remplissage et le récipient interne. Comme il y a une cavité de passage de l'eau entre le cylindre de remplissage et la paroi du fond, lorsqu'on chauffe le récipient interne, la pression à l'intérieur de l'espace hermétique croît, et l'eau est, sous l'action de la pression, envoyée à travers le mécanisme d'ouverture et la cavité de passage de l'eau jusque dans la chambre de remplissage située au-dessus de la plaque perméable pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage, l'eau est séparée du riz se trouvant dans la chambre de remplissage. Le processus de rinçage ou le processus de cuisson à l'eau du riz avec l'eau se trouvant dans le récipient interne est ainsi mené à bien, on passe ensuite au processus suivant de cuisson à la vapeur du riz.

Il faut préciser que, lorsque le niveau de l'eau baisse jusqu'à atteindre le mécanisme d'ouverture, l'espace hermétique entre le cylindre de remplissage et le récipient interne n'est plus hermétique, cet espace désormais non-hermétique est relié à la cavité de passage de l'eau et à la chambre de remplissage. La vapeur qui s'élève entre par le mécanisme d'ouverture dans la chambre de remplissage, ou bien après être entrée dans l'espace hermétique formé, entre le cylindre de remplissage et le récipient interne, entre ensuite dans la chambre de remplissage, pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne pour l'envoyer vers la cavité de passage de l'eau.

Dans l'usage du cuiseur électrique selon présente invention, le contrôle du nombre d'entrées ou de sorties de l'eau dans ou hors de la chambre de remplissage, de la température de l'eau et du temps de rétention de l'eau à l'intérieur de la partie de la chambre de remplissage située au-dessus de la plaque perméable permet au cuiseur électrique de réaliser de manière automatique le processus de rinçage du riz et d'absorption de l'eau par le riz, et en même temps d'effectuer les processus de la cuisson à l'eau suivie par la cuisson à la vapeur à l'intérieur de la chambre de remplissage, de manière que le cuiseur électrique cuise un riz à indice glycémique (IG) bas plus nutritif, et à augmenter le degré de satisfaction des consommateurs relativement au processus de cuisson.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes :
La figure 1 est le schéma structurel d'un cuiseur à riz selon un exemple d'application possible de la présente invention.
La figure 2 est le schéma d'assemblage du récipient interne, du joint d'étanchéité et du panier à vapeur du cuiseur à riz de la figure 1.
La figure 3 est le schéma structurel du joint d'étanchéité et du panier à vapeur de la figure 2 lorsque ces deux parties sont séparées.
La figure 4 est le schéma structurel du panier à vapeur de la figure 3.
La figure 5 est le schéma du statut de cuisson lorsque le niveau de l'eau à l'intérieur du récipient interne du cuiseur à riz de la figure 1 est situé au dessous de la plaque perméable.
La figure 6 est le schéma du statut de cuisson lorsque le niveau de l'eau à l'intérieur du récipient interne du cuiseur à riz de la figure 1 est situé au dessous de la plaque perméable.

Il faut préciser qu'en l'absence d'incompatibilité, les exemples d'applications de la présente demande et les caractéristiques de ces exemples d'applications peuvent être mutuellement combinés. On va ci-dessous expliquer de manière concise la présente invention au moyen des figures annexes de référence combinées à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les figures annexes, ou bien renvoient aux directions verticales, perpendiculaires ou de gravité des pièces elles-mêmes. De même, afin de faciliter la compréhension et la description "à l'intérieur de" et "à l'extérieur de" renvoient à l'intérieur ou l'extérieur de la silhouette de la pièce en question, toutefois, les termes de direction susmentionnés ne constituent en rien une limitation de la présente invention.

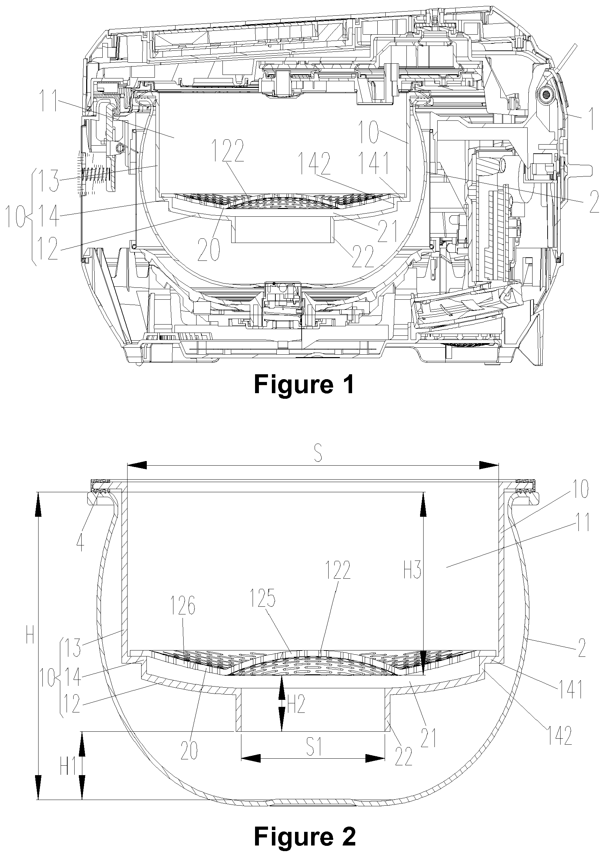

La présente invention résout les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas. La présente invention propose un panier à vapeur et un cuiseur électrique. Comme le montre l'exemple d'application possible de la figure 1, le cuiseur électrique peut être un cuiseur à riz qui comporte un boîtier externe (1), un récipient interne (2) et un panier à vapeur, lequel panier à vapeur est installé à l'intérieur du récipient interne (2), et la partie supérieure du cylindre de remplissage (10) du panier à vapeur et l'ouverture du récipient interne (2) étant abouchées de manière hermétique.

Un joint d'étanchéité (4) est placé entre la partie supérieure du cylindre de remplissage (10) du panier à vapeur et l'ouverture du récipient interne (2).

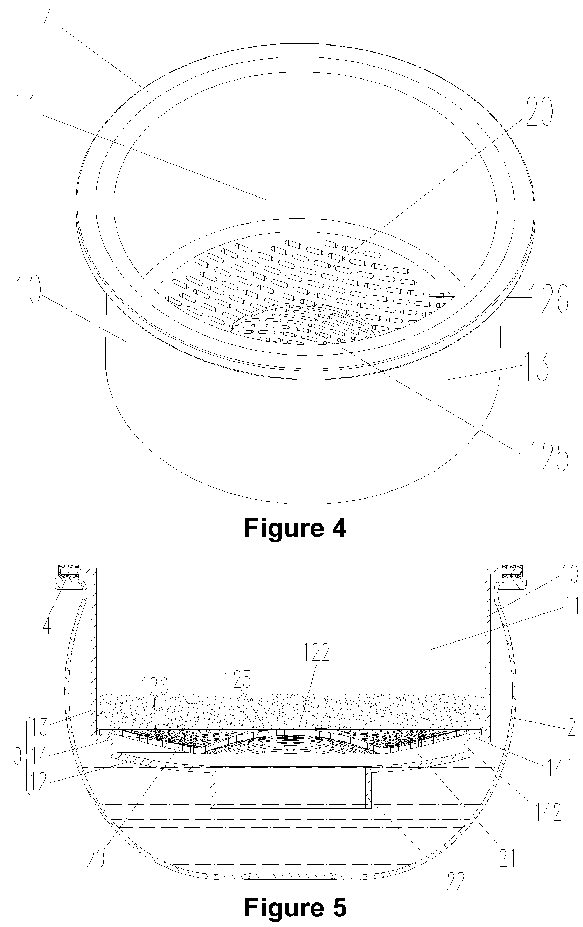

Dans le mode d'application concret de la figure 5, le bord supérieur du cylindre de remplissage (10) est abouché au bord supérieur du récipient interne (2) au moyen du joint d'étanchéité (4).

Bien entendu, le cuiseur électrique de la présente invention peut être au choix un cuiseur à riz, un four micro-ondes, un fait-tout électrique ou une cocotte-minute électrique. Le cuiseur électrique comporte en son sein le récipient interne (2), le joint d'étanchéité (4) et le panier à vapeur, lequel panier à vapeur possède les spécificités ci-dessous.

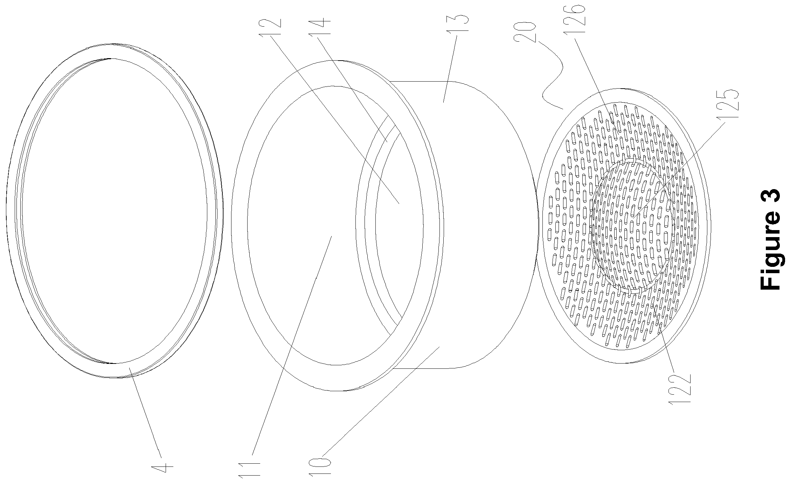

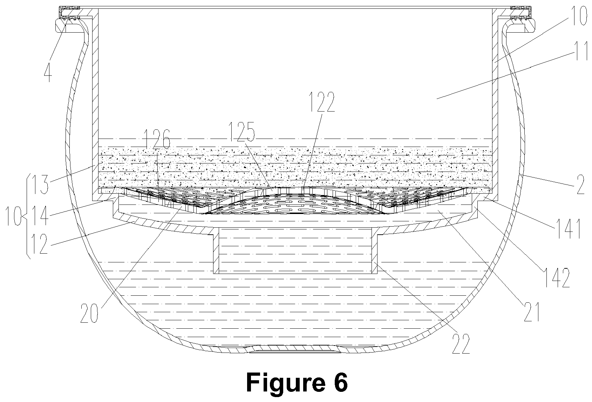

Comme l'indiquent les figures 2 à 6, le panier à vapeur comporte le cylindre de remplissage (10) et une plaque perméable (20) installée à l'intérieur d'une chambre de remplissage (11). Le cylindre de remplissage (10) possède la chambre de remplissage (11), un mécanisme d'ouverture (22) est installé sur la paroi du fond (12) du cylindre de remplissage (10). La plaque perméable (20) possède une zone perméable, laquelle zone perméable est percée de nombreux trous de passage de l'eau (122) qui traversent la plaque perméable (20). L'espace situé entre la plaque perméable (20) et le cylindre de remplissage (10) forme une cavité de passage de l'eau (21). Le mécanisme d'ouverture (22) et la cavité de passage de l'eau (21) sont reliés.

Etant donné que la plaque perméable (20) est située à l'intérieur de la chambre de remplissage (11) du cylindre de remplissage (10) et qu'elle comporte une zone perméable, l'eau se trouvant à l'intérieur du récipient interne (2) est, sous l'action de la pression, envoyée à travers les trous de passage de l'eau (122) de cette zone perméable jusque dans la chambre de remplissage (11) ou évacuée hors de la chambre de remplissage (11), de cette manière on peut ainsi réaliser de manière répétée le trempage et le rinçage du riz à l'intérieur de la chambre de remplissage (11), ceci afin de réduire la teneur en sucre du riz.

Après qu'on a placé le cylindre de remplissage (10) dans le récipient interne (2), la partie supérieure du cylindre de remplissage (10) est hermétiquement abouchée à l'ouverture du récipient interne (2). Dans la phase préliminaire, le niveau de l'eau se trouvant à l'intérieur du récipient interne (2) est supérieur au mécanisme d'ouverture (22) de la paroi du fond (12), de sorte qu'un espace hermétique est formé entre le cylindre de remplissage (10) et le récipient interne (2). Comme il y a une cavité de passage de l'eau (21) entre la paroi du fond (12) et le cylindre de remplissage (10), lorsqu'on chauffe le récipient interne (2), la pression à l'intérieur de l'espace hermétique croît, et l'eau est, sous l'action de la pression, envoyée à travers le mécanisme d'ouverture (22) et la cavité de passage de l'eau (21) jusque dans la partie de la chambre de remplissage (11) située au dessus de la plaque perméable pour entrer en contact avec le riz et réaliser le rinçage, le trempage, la cuisson à l'eau et l'absorption de l'eau par le riz, puis le niveau d'eau ayant baissé, lorsque l'eau se retire de la chambre de remplissage (11), l'eau est séparée du riz se trouvant dans la chambre de remplissage (11). Le processus de rinçage ou le processus de cuisson à l'eau du riz avec l'eau se trouvant dans le récipient interne (2) est ainsi mené à bien, on passe ensuite au processus suivant de cuisson à la vapeur du riz.

Il faut préciser que, lorsque le niveau de l'eau baisse jusqu'à atteindre le mécanisme d'ouverture (22), l'espace hermétique entre le cylindre de remplissage (10) et le récipient interne (2) n'est plus hermétique, cet espace désormais non-hermétique est relié à la cavité de passage de l'eau (21) et à la chambre de remplissage (11). La vapeur qui s'élève entre par le mécanisme d'ouverture (22) dans la chambre de remplissage (11), ou bien après être entrée dans l'espace hermétique formé par le cylindre de remplissage (10) et le récipient interne (2), entre ensuite jusque dans la chambre de remplissage (11) pour procéder à la cuisson vapeur du riz. A ce moment-là, comme l'espace hermétique a perdu son hermétisme, la vapeur ne s'accumulera pas dans l'espace hermétique et la pression à l'intérieur de l'espace hermétique ne croîtra pas de manière continue. Autrement dit, la vapeur à l'intérieur de l'espace hermétique ayant perdu son hermétisme est incapable de comprimer l'eau hors du récipient interne (2) pour l'envoyer vers la cavité de passage de l'eau (21).

Dans l'usage du cuiseur électrique selon la présente invention, le contrôle du nombre d'entrées ou de sorties de l'eau dans ou hors de la chambre de remplissage (11), de la température de l'eau et du temps de rétention de l'eau à l'intérieur de la chambre de remplissage (11) permet au cuiseur électrique de réaliser de manière automatique le processus de rinçage du riz et d'absorption de l'eau par le riz, et en même temps d'effectuer le processus de cuisson à l'eau puis cuisson à la vapeur du riz se trouvant dans la chambre de remplissage (11), de manière que le cuiseur électrique cuise un riz à indice glycémique (IG) bas plus nutritif, et à augmenter le degré de satisfaction des consommateurs relativement au processus de cuisson. C'est pourquoi, le cuiseur électrique selon la présente invention est multifonction, largement automatisé et hautement pratique.

Comme l'indiquent les figures 2, 5 et 6, le cylindre de remplissage (10) comporte une structure entretoisée, la plaque perméable (20) est installée à l'intérieur de la chambre de remplissage (11) grâce à cette structure entretoisée, et la plaque perméable (20) est installée à un certain intervalle de la paroi du fond (12), tous les trous de la zone perméable sont reliés à la cavité de passage de l'eau (21).

Le cylindre de remplissage (10) comportant une structure entretoisée et la plaque perméable (20) installée à l'intérieur de la chambre de remplissage (11) grâce à cette structure entretoisée permettent de garantir la stabilité de la plaque perméable reposant sur les entretoises, et ainsi d'augmenter la fiabilité d'utilisation du panier à vapeur. Etant donné que la plaque perméable (20) et la paroi du fond (12) sont séparées par un intervalle, tous les trous de passage de l'eau de la zone perméable sont reliés à la cavité de passage de l'eau, ainsi, l'eau et la vapeur d'eau se trouvant dans le récipient interne (2) peuvent uniquement passer par le mécanisme d'ouverture (22) du cylindre de remplissage (10), puis par la zone perméable de la plaque perméable (20) pour entrer dans la partie de la chambre de remplissage (11) située au-dessus de la plaque perméable. Comme le trajet de circulation de l'eau à l'intérieur du récipient interne (2) est restreint, en contrôlant la pression à l'intérieur du logement situé entre le récipient interne (2) et le cylindre de remplissage (10) et à l'intérieur de la chambre de remplissage, on peut contrôler la durée de contact entre l'eau et le riz se trouvant sur la plaque perméable (20), de manière à réaliser de façon stable le processus de rinçage du riz et d'absorption de l'eau par le riz. La vapeur se trouvant à l'intérieur du récipient interne (2) ne peut entrer jusque dans la chambre de remplissage (11) qu'en empruntant un itinéraire unique, ceci afin d'éviter que la vapeur n'entre dans la chambre de remplissage (11) par d'autres endroits, et afin de garantir l'hermétisme du logement formé entre le récipient interne (2) et le cylindre de remplissage (10) et l'hermétisme de la chambre de remplissage (11), de manière à pouvoir contrôler efficacement la pression à l'intérieur du logement formé entre le récipient interne (2) et le cylindre de remplissage (10) et la pression de la chambre de remplissage (11).

De plus, dans un exemple d'application qui n'est pas illustré, la structure entretoisée est installée de façon protubérante sur la surface interne de la paroi latérale (13) du cylindre de remplissage (10), et la plaque perméable (20) est installée sur ladite structure entretoisée. De cette manière la structure entretoisée indépendante installée à l'intérieur du cylindre de remplissage permet d'améliorer la stabilité du support de la plaque perméable (20).

Lorsque la structure entretoisée est multiple, elle est installée de façon protubérante sur la surface interne de la paroi latérale (13) du cylindre de remplissage (10), et les diverses structures entretoisées sont disposées verticalement à l'intérieur du cylindre de remplissage (10) à des hauteurs différentes. De cette manière, on peut contrôler plus aisément la hauteur de la plaque perméable (20), et l'utilisateur peut ajuster la hauteur de la plaque perméable (20) à l'intérieur du cylindre de remplissage (10) pour régler le niveau d'humidité du riz après cuisson à la vapeur. En outre, une avarie du mécanisme de remplissage n'entraînera plus l'impossibilité d'installer la plaque perméable (20) à l'intérieur du cylindre de remplissage (10), ce qui permet donc d'améliorer la fiabilité d'utilisation du panier à vapeur.

Comme l'indiquent les figures 1, 2, 5 et 6, le cylindre de remplissage (10) comprend encore : une paroi latérale (13), une paroi du fond (12), une paroi crénelée (14) destinée à relier la paroi latérale (13) à la paroi du fond (12), laquelle paroi crénelée (14) forme ladite structure entretoisée et laquelle paroi crénelée (14) comprend une section horizontale (141) et une section verticale (142) interconnectées. La section horizontale (141) est connectée au fond de la paroi latérale (13), et le fond de ladite section verticale (142) est connecté à la paroi du fond (12). et la plaque perméable (20) repose sur ladite section horizontale (141). Ainsi, la structure entretoisée constitue une partie de la paroi du cylindre de remplissage (10). La propre structure de la paroi du cylindre de remplissage (10) est utilisée pour faire office de support à la plaque perméable (20). Non seulement on a utilisé efficacement la structure du cylindre de remplissage (10), ce qui a permis d'améliorer la rationalité de la conception structurelle du panier à vapeur, mais on évite aussi les gaspillages de matériau entraînés par l'installation d'une structure entretoisée indépendante, ce qui permet d'accroître l'aspect économique du panier à vapeur.

La paroi du fond (12) présente une structure plate ou incurvée. La plaque perméable (20) présentant une structure plate a l'avantage d'être facile à fabriquer, ce qui réduit les coûts de revient de la fabrication du panier à vapeur, dans un même temps cela permet de garantir que la profondeur du riz se trouvant sur la partie supérieure de la plaque perméable (20) soit partout égale, et donc que, durant le processus de cuisson à la vapeur du riz, le riz soit cuit de la même façon sur un niveau égal.

La plaque perméable (20) présentant une structure incurvée permet de satisfaire les besoins de divers autres utilisateurs.

Concrètement, la plaque perméable (20) présentant une structure incurvée est installée avec un côté bombé vers ou en direction opposée à la paroi du fond (12). La plaque perméable (20) présentant une structure incurvée bombée du coté faisant face à la paroi du fond (12) permet de faire en sorte que la profondeur du riz se trouvant sur la partie supérieure de la plaque perméable (20) soit progressivement réduite depuis les quatre bords jusqu'au centre, la quantité de riz se trouvant au centre de la plaque perméable (20) étant moindre, de sorte que la vapeur passera plus facilement à travers le riz se trouvant au centre de la plaque perméable (20) et pénétrera jusque dans l'espace de la chambre de remplissage (11) situé au-dessus de la couche de riz, ce qui permettra au riz de la couche supérieure se trouvant dans la chambre de remplissage de cuire plus facilement à la vapeur. On aura donc amélioré ainsi la fiabilité d'utilisation du cuiseur électrique. La plaque perméable (20) présentant une structure incurvée bombée dans le sens opposé à la paroi du fond (12) permet d'accroître la capacité effective de la chambre de remplissage (11) située au-dessus de la plaque perméable (20), et d'augmenter ainsi la quantité de riz pouvant être contenue dans la chambre de remplissage (11).

Comme l'indiquent les exemples d'applications au choix des figures 2, 5 et 6, la plaque perméable (20) comporte une zone centrale (125) située au centre de la plaque perméable (20) et une zone périphérique (126) qui entoure cette zone centrale (125), avec un côté de la zone centrale (125) bombé dans le sens opposé à la paroi du fond (12), et un côté de la zone périphérique (126) étant bombé vers la paroi du fond (12). Ainsi, en augmentant la capacité effective de la chambre de remplissage (11) située au-dessus de la plaque perméable (20), la vapeur passe plus facilement à travers le riz se trouvant sur la zone centrale (125) de la paroi du fond (12) et pénètre jusque dans l'espace de la chambre de remplissage (11) situé au dessus de la couche de riz, ce qui permet à la couche supérieure du riz se trouvant dans la chambre de remplissage (11) d'être plus aisément cuit à la vapeur, en outre la zone périphérique (126) peut accueillir davantage de riz, on améliore ainsi la commodité d'utilisation du cuiseur électrique.

Le mécanisme d'ouverture (22) présente une forme tubulaire droite ou une forme conique. La fabrication des mécanismes d'ouverture (22) de forme tubulaire est aisée. Les mécanismes d'ouverture (22) ayant la forme conique permettent de faire en sorte que la vapeur générée par l'eau bouillante se trouvant à l'intérieur du récipient interne (2) pénètre facilement et en grande quantité dans la chambre de remplissage (11), ce qui permet de raccourcir le temps de cuisson à la vapeur du riz se trouvant dans la chambre de remplissage (11) et d'améliorer ainsi le côté pratique du cuiseur électrique. Le mécanisme d'ouverture (22) en forme conique permet de réduire la capacité de l'espace enfermé par le mécanisme d'ouverture (22), ce qui permet à l'eau se trouvant à l'intérieur du récipient interne (2) d'entrer plus aisément à l'intérieur de la chambre de remplissage (11), et d'élever efficacement la hauteur du niveau de l'eau dans la chambre de remplissage (11) de manière à faciliter le trempage du riz dans la chambre de remplissage (11), et à améliorer ainsi le côté pratique du cuiseur électrique.

Le mécanisme d'ouverture (22) est installé sur les orifices du couvercle de fond (12).

Le mécanisme d'ouverture (22) présente une symétrie axiale sur la projection orthogonale de la paroi du fond (12). Ainsi on peut améliorer l'aspect esthétique du panier à vapeur et également le confort d'utilisation du cuiseur électrique par l'utilisateur. Par ailleurs, le mécanisme d'ouverture (22) réduit la surface de contact entre le panier à vapeur et la surface plane destinée à le recevoir, ce qui permet d'économiser la surface occupée par le panier à vapeur, et d'améliorer l'aspect pratique du panier à vapeur. Le mécanisme d'ouverture (22) présentant une symétrie axiale permet de répartir de manière uniforme la force subie par le panier à vapeur, ce qui permet donc d'améliorer la stabilité du panier à vapeur lorsqu'il est sur une surface plane.

La paroi du fond (12) présente une surface incurvée, un côté de la paroi du fond (12) étant bombé dans la direction opposée à la plaque perméable (20) de la chambre de remplissage (11), et le mécanisme d'ouverture (22) étant situé au centre géométrique de la paroi du fond (12). Ainsi, lorsque l'eau passe à travers le mécanisme d'ouverture (22) jusque dans la chambre de remplissage (11), l'eau peut, à l'heure programmée, entrer rapidement et entièrement en contact avec le riz se trouvant à l'intérieur de la chambre de remplissage (11), de manière à réaliser le rinçage fiable du riz se trouvant dans la chambre de remplissage (11), et dans un même temps à garantir la constance d'absorption de l'eau par le riz dans la chambre de remplissage (11).

Les trous de passage de l'eau (122) sont de forme ronde, ovale, de noix de cajou ou polygonale, tous les trous étant de la même forme ou bien mêlant plusieurs de ces formes. Ainsi, la forme et la taille raisonnables des trous de passage de l'eau (122) permettent, lorsque l'eau se trouvant dans le récipient interne (2) est envoyée sous l'action de la pression à travers les trous de passage de l'eau (122), de faire en sorte que les grains de riz de petite taille passent à travers les trous de passage de l'eau (122) pour être emmenés jusque dans la chambre de remplissage (11), et, dans un même temps, permettent d'éviter que l'eau n'emporte les grains de riz de taille importante jusque dans le récipient interne (2) et donc tout gaspillage de riz. On améliore ainsi la commodité d'utilisation du panier à vapeur.

Comme cela est indiqué dans un exemple d'application de la présente invention non illustré, le panier à vapeur comprend encore plusieurs renforcements, lesquels renforcements sont situés sur la surface du côté la paroi du fond (12) opposé au cylindre de remplissage (11) et sont disposés dans le prolongement du rayon de la paroi du fond (12). Ces multiples renforcements sont situés de part et d'autre du périmètre du mécanisme d'ouverture (22) et séparés par celui-ci. Ainsi on parvient à renforcer efficacement la structure de la paroi du fond (12), à éviter que la paroi du fond (12) qui est soumise pendant de longues durées à l'impact de l'eau et de la vapeur ne se déforme, et donc à rallonger la durée de vie du panier à vapeur.

Dans la structure d'assemblage du panier à vapeur et du récipient interne (2) de la présente invention, afin de garantir que l'eau se trouvant à l'intérieur du récipient interne (2) entre dans ou sorte correctement de la chambre de remplissage (11), de manière à ce que le cuiseur électrique réalise sans encombre les processus de rinçage du riz, d'absorption de l'eau par le riz, de cuisson à l'eau du riz et de cuisson vapeur du riz, et pour produire un récipient interne (2) et un panier à vapeur de structure rationnelle, la présente invention a établi certaines restrictions paramétriques essentielles relativement aux dimensions du récipient interne (2) et du panier vapeur, qui sont concrètement les suivantes :
Comme le montre la figure 2, le rapport de la surface d'ouverture S1 du mécanisme d'ouverture (22) et la section transversale S de la chambre de remplissage (11) du cylindre de remplissage (10) est supérieur ou égal à 0,05 et inférieur ou égal à 1,5.

Le rapport de la surface d'ouverture S1 du mécanisme d'ouverture (22) et la section transversale S de la chambre de remplissage du cylindre de remplissage (10) est supérieur ou égal à 0,3 et inférieur ou égal à 0,8.

Comme le montre la figure 2, le rapport entre la hauteur H1 allant du mécanisme d'ouverture (22) du cylindre de remplissage (10) du panier à vapeur jusqu'au fond du récipient interne (2) et la profondeur H du récipient interne (2) est supérieur ou égal à 0,1 et inférieur ou égal à 0,8.

Le rapport entre la hauteur H2 allant du mécanisme d'ouverture (22) jusqu'au point le plus bas de la plaque perméable (20) et la profondeur H du récipient interne (2) est supérieur ou égal à 0,1 et inférieur ou égal à 0,8.

Dans un exemple d'application de la présente invention non illustré, la plaque perméable (20) présente une structure plate, le rapport entre la distance allant de la plaque perméable (20) à structure plate jusqu'au bord supérieur du récipient interne (2) et la profondeur H du récipient interne (2) est supérieur ou égal à 0,1 et inférieur ou égal à 0,8.

Comme l'indique la figure 2, le rapport entre la hauteur H3 allant du point le plus bas de la plaque perméable (20) présentant une surface incurvée jusqu'au bord supérieur du récipient interne (2) et la profondeur H du récipient interne (2) est supérieur ou égal à 0,1 et inférieur ou égal à 0,8.

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la présente description des termes "comporter" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non décrire une séquence spécifique ou un ordre d'antériorité-postériorité. Il faut comprendre que les données utilisées ainsi peuvent dans des conditions appropriées être interchangées.

Les exemples mentionnés plus haut constituent uniquement des exemples d'applications préférables de la présente invention, ils ne constituent en rien une restriction de la présente invention.

## Revendications

1. Cuiseur électrique comportant un panier à vapeur qui comprend :
- un cylindre de remplissage (10), lequel cylindre de remplissage (10) comporte une chambre de remplissage (11), et la paroi du fond (12) du cylindre de remplissage (10) est pourvue d'un mécanisme d'ouverture (22),
- installé sur la chambre de remplissage (11) se trouve une plaque perméable (20), laquelle plaque perméable (20) comporte une zone perméable, laquelle zone perméable est percée de plusieurs trous de passage de l'eau (122) qui traversent la plaque perméable (20), et entre ladite plaque perméable (20) et la paroi du fond (12) du cylindre de remplissage (10) se trouve une cavité de passage de l'eau (21), ledit mécanisme d'ouverture (22) et ladite cavité de passage de l'eau (21) sont reliés,
**caractérisé en ce que** le cuiseur électrique comporte un boîtier externe (1), un récipient interne (2) disposé à l'intérieur du boîtier externe (1), le panier à vapeur étant installé à l'intérieur du récipient interne (2), la partie supérieure du cylindre de remplissage (10) de ce panier à vapeur étant hermétiquement abouchée à l'ouverture du récipient interne (2).

2. Cuiseur électrique selon la revendication 1, **caractérisé en ce que** le cylindre de remplissage (10) comporte une structure entretoisée, la plaque perméable (20) est soutenue à l'intérieur de la chambre de remplissage (11) par cette structure entretoisée, et un intervalle existe entre la plaque perméable (20) et la paroi du fond (12), tous les trous de passage de l'eau (122) de la zone perméable sont reliés à la cavité de passage de l'eau (21).

3. Cuiseur électrique selon la revendication 2, **caractérisé en ce que** la paroi du cylindre de remplissage (10) comporte :
- une paroi latérale (13),
- la paroi du fond (12),
- une paroi crénelée (14) destinée à relier la paroi latérale (13) à la paroi du fond (12), laquelle paroi crénelée (14) forme ladite structure entretoisée et laquelle paroi crénelée (14) comprend une section horizontale (141) et une section verticale (142) interconnectées, laquelle section horizontale (141) est connectée au fond de la paroi latérale (13), et le fond de ladite section verticale (142) est connectée à la paroi du fond (12), et la plaque perméable (20) repose sur ladite section horizontale (141).

4. Cuiseur électrique selon la revendication 2, **caractérisé en ce que** la structure entretoisée est installée de façon protubérante sur la surface interne de la paroi latérale (13) du cylindre de remplissage, et la plaque perméable (20) est installée sur ladite structure entretoisée.

5. Cuiseur électrique selon la revendication 1, **caractérisé en ce que** la plaque perméable (20) présente une structure plane ou une structure incurvée.

6. Cuiseur électrique selon la revendication 5, **caractérisé en ce que** la plaque perméable (20) présente une structure incurvée, et ladite plaque perméable (20) est installée avec un côté bombé vers ou en direction opposée à la paroi du fond (12).

7. Cuiseur électrique selon la revendication 1, **caractérisé en ce que** la plaque perméable (20) comporte une zone centrale (125) située au centre de la plaque perméable (20) et une zone périphérique (126) située autour de cette zone centrale (125), avec un côté de la zone centrale (125) bombé en direction opposée à la paroi du fond (12) et un côté de la zone périphérique (125) bombé vers la paroi du fond (12).

8. Cuiseur électrique selon la revendication 1, **caractérisé en ce que** le mécanisme d'ouverture (22) présente une forme tubulaire droite ou une forme conique.

9. Cuiseur électrique selon la revendication 1, **caractérisé en ce que** le mécanisme d'ouverture (22) est installé sur les orifices du couvercle de fond (12).

10. Cuiseur électrique selon la revendication 1, **caractérisé en ce que** le rapport de la surface d'ouverture S1 du mécanisme d'ouverture (22) et la section transversale S de la chambre de remplissage (11) du cylindre de remplissage (10) est supérieur ou égal à 0,05 et inférieur ou égal à 1,5.

11. Cuiseur électrique selon la revendication 10, **caractérisé en ce que** le rapport de la surface d'ouverture S1 du mécanisme d'ouverture (22) et la section transversale S de la chambre de remplissage (11) du cylindre de remplissage (10) est supérieur ou égal à 0,3 et inférieur ou égal à 0,8.

12. Cuiseur électrique selon la revendication 1, **caractérisé en ce que** le mécanisme d'ouverture (22) présente une symétrie axiale avec la projection orthogonale de la plaque perméable (20).

13. Cuiseur électrique selon la revendication 1, **caractérisé en ce que** la paroi du fond (12) présente une surface incurvée, un côté de la paroi du fond (12) étant bombé dans la direction opposée à la plaque perméable (20) de la chambre de remplissage (11), et le mécanisme d'ouverture (22) étant situé au centre géométrique de la paroi du fond (12).

14. Cuiseur électrique selon la revendication 13, **caractérisé en ce qu'**il comporte plusieurs renforcements, lesquels renforcements sont situés sur la surface du côté de la paroi du fond (12) opposé à la chambre de remplissage (11) et dans le prolongement du rayon de la paroi du fond (12), et lesdits renforcements sont situés de part et d'autre du mécanisme d'ouverture et séparés les uns des autres par celui-ci.

15. Cuiseur électrique selon la revendication 1, **caractérisé en ce que** les trous de passages de l'eau (122) sont de forme ronde, ovale, de noix de cajou ou polygonale, tous les trous étant de la même forme ou bien mêlant plusieurs de ces formes.

16. Cuiseur électrique selon la revendication 1, **caractérisé en ce qu'**un joint d'étanchéité (4) est placé entre la partie supérieure du cylindre de remplissage (10) du panier à vapeur et l'ouverture du récipient interne (2).

17. Cuiseur électrique selon la revendication 1, **caractérisé en ce que** le rapport entre la hauteur H1 allant du mécanisme d'ouverture (22) du cylindre de remplissage (10) du panier à vapeur jusqu'au fond du récipient interne (2) et la profondeur H du récipient interne (2) est supérieur ou égal à 0,1 et inférieur ou égal à 0,8.

18. Cuiseur électrique selon la revendication 1, **caractérisé en ce que** la plaque perméable (20) du panier à vapeur présente une structure plate ou incurvée, et le rapport entre la hauteur H2 allant de l'ouverture du mécanisme d'ouverture (22) jusqu'au point le plus bas de la plaque perméable (20) et la profondeur H du récipient interne (2) est supérieur ou égal à 0,1 et inférieur ou égal à 0,8.

19. Cuiseur électrique selon la revendication 1, **caractérisé en ce que** la plaque perméable (20) du panier à vapeur présente une structure plate ou incurvée, et le rapport entre la hauteur H3 allant du point le plus bas de la plaque perméable (20) jusqu'au bord supérieur du récipient interne (2) et la profondeur H du récipient interne (2) est supérieur ou égal à 0,1 et inférieur ou égal à 0,8.

## Patentansprüche

1. Elektrischer Kocher, der einen Dampfkorb beinhaltet, Folgendes umfassend:
- einen Füllzylinder (10), wobei der Füllzylinder (10) eine Füllkammer (11) beinhaltet und die Wand des Bodens (12) des Füllzylinders (10) mit einem Öffnungsmechanismus (22) versehen ist,
- auf der Füllkammer (11) installiert befindet sich eine durchlässige Platte (20), wobei die durchlässige Platte (20) eine durchlässige Zone beinhaltet, wobei die durchlässige Zone mit mehreren Durchgangslöchern für das Wasser (122) durchbohrt ist, die die durchlässige Platte (20) durchqueren, und sich zwischen der durchlässigen Platte (20) und der Wand des Bodens (12) des Füllzylinders (10) ein Durchgangshohlraum für das Wasser (21) befindet, wobei der Öffnungsmechanismus (22) und der Durchgangshohlraum für das Wasser (21) verbunden sind,
**dadurch gekennzeichnet, dass** der elektrische Kocher ein äußeres Gehäuse (1), einen inneren Behälter (2), der im Inneren des äußeren Gehäuses (1) angeordnet ist, beinhaltet, wobei der Dampfkorb im Inneren des inneren Behälters (2) installiert ist, wobei der obere Teil des Füllzylinders (10) dieses Dampfkorbes an der Öffnung des inneren Behälters (2) hermetisch angefügt ist.

2. Elektrischer Kocher nach Anspruch 1, **dadurch gekennzeichnet, dass** der Füllzylinder (10) eine abgeriegelte Struktur beinhaltet, die durchlässige Platte (20) im Inneren der Füllkammer (11) durch diese abgeriegelte Struktur gestützt wird, und ein Intervall zwischen der durchlässigen Platte (20) und der Wand des Bodens (12) existiert, alle Durchgangslöcher für das Wasser (122) der durchlässigen Zone mit dem Durchgangshohlraum für das Wasser (21) verbunden sind.

3. Elektrischer Kocher nach Anspruch 2, **dadurch gekennzeichnet, dass** die Wand des Füllzylinders (10) beinhaltet:
- eine seitliche Wand (13),
- die Wand des Bodens (12),
- eine ausgezackte Wand (14), die dazu bestimmt ist, die seitliche Wand (13) mit der Wand des Bodens (12) zu verbinden, wobei die ausgezackte Wand (14) die abgeriegelte Struktur bildet, und wobei die ausgezackte Wand (14) einen horizontalen Abschnitt (141) und einen vertikalen Abschnitt (142) umfasst, die miteinander verknüpft sind, wobei der horizontale Abschnitt (141) am Boden der seitlichen Wand (13) verknüpft ist und der Boden des vertikalen Abschnitts (142) mit der Wand des Bodens (12) verknüpft ist, und die durchlässige Platte (20) auf dem horizontalen Abschnitt (141) aufliegt.

4. Elektrischer Kocher nach Anspruch 2, **dadurch gekennzeichnet, dass** die abgeriegelte Struktur in hervorspringender Form auf der Innenfläche der seitlichen Wand (13) des Füllzylinders installiert ist und die durchlässige Platte (20) auf der abgeriegelten Struktur installiert ist.

5. Elektrischer Kocher nach Anspruch 1, **dadurch gekennzeichnet, dass** die durchlässige Platte (20) eine ebene Struktur oder eine gekrümmte Struktur aufweist.

6. Elektrischer Kocher nach Anspruch 5, **dadurch gekennzeichnet, dass** die durchlässige Platte (20) eine gekrümmte Struktur aufweist, und die durchlässige Platte (20) mit einer balligen Seite zur, oder in entgegengesetzter Richtung zur Wand des Bodens (12) installiert ist.

7. Elektrischer Kocher nach Anspruch 1, **dadurch gekennzeichnet, dass** die durchlässige Platte (20) eine mittlere Zone (125) beinhaltet, die sich in der Mitte der durchläsisgen Platte (20) befindet, und eine umlaufende Zone (126), die sich um diese mittlere Zone (125) herum befindet, mit einer Seite der mittleren Zone (125), die in entgegengesetzter Richtung zur Wand des Bodens (12) ballig ist, und einer Seite der umlaufenden Zone (125), die zur Wand des Bodens (12) ballig ist.

8. Elektrischer Kocher nach Anspruch 1, **dadurch gekennzeichnet, dass** der Öffnungsmechanismus (22) eine gerade röhrenförmige Form oder eine konische Form aufweist.

9. Elektrischer Kocher nach Anspruch 1, **dadurch gekennzeichnet, dass** der Öffnungsmechanismus (22) auf den Öffnungen des Bodendeckels (12) installiert ist.

10. Elektrischer Kocher nach Anspruch 1, **dadurch gekennzeichnet, dass** das Verhältnis der Öffnungsfläche S1 des Öffnungsmechanismus (22) und des Querschnitts S der Füllkammer (11) des Füllzylinders (10) größer oder gleich 0,05 und kleiner oder gleich 1,5 ist.

11. Elektrischer Kocher nach Anspruch 10, **dadurch gekennzeichnet, dass** dass das Verhältnis der Öffnungsfläche S1 des Öffnungsmechanismus (22) und des Querschnitts S der Füllkammer (11) des Füllzylinders (10) größer oder gleich 0,3 und kleiner oder gleich 0,8 ist.

12. Elektrischer Kocher nach Anspruch 1, **dadurch gekennzeichnet, dass** der Öffnungsmechanismus (22) eine axiale Symmetrie mit der orthogonalen Projektion der durchlässigen Platte (20) aufweist.

13. Elektrischer Kocher nach Anspruch 1, **dadurch gekennzeichnet, dass** die Wand des Bodens (12) eine gekrümmte Oberfläche aufweist, wobei eine Seite der Wand des Bodens (12) in der Richtung entgegengesetzt zur durchlässigen Platte (20) der Füllkammer (11) ballig ist, und sich der Öffnungsmechanismus (22) in der geometrischen Mitte der Wand des Bodens (12) befindet.

14. Elektrischer Kocher nach Anspruch 13, **dadurch gekennzeichnet, dass** er mehrere Verstärkungen beinhaltet, wobei sich die Verstärkungen auf der Fläche der Seite der Wand des Bodens (12) entgegengesetzt zu der Füllkammer (11) und in der Verlängerung des Radius der Wand des Bodens (12) befinden und sich die Verstärkungen beiderseits des Öffnungsmechanismus befinden und durch diesen voneinander getrennt sind.

15. Elektrischer Kocher nach Anspruch 1, **dadurch gekennzeichnet, dass** die Durchgangslöcher für das Wasser (122) in runder, ovaler, Cashewnuss-, oder vieleckiger Form sind, wobei alle Löcher in derselben Form sind oder mehrere dieser Formen vermengen.

16. Elektrischer Kocher nach Anspruch 1, **dadurch gekennzeichnet, dass** eine Dichtung (4) zwischen dem oberen Teil des Füllzylinders (10) des Dampfkorbes und der Öffnung des inneren Behälters (2) platziert ist.

17. Elektrischer Kocher nach Anspruch 1, **dadurch gekennzeichnet, dass** das Verhältnis zwischen der Höhe H1, die vom Öffnungsmechanismus (22) des Füllzylinders (10) des Dampfkorbes bis zum Boden des inneren Behälters (2) reicht, und der Tiefe H des inneren Behälters (2) größer oder gleich 0,1 und kleiner oder gleich 0,8 ist.

18. Elektrischer Kocher nach Anspruch 1, **dadurch gekennzeichnet, dass** die durchlässige Platte (20) des Dampfkorbes eine ebene oder gekrümmte Struktur aufweist und das Verhältnis zwischen der Höhe H2, die von der Öffnung des Öffnungsmechanismus (22) bis zum niedrigsten Punkt der durchlässigen Platte (20) reicht, und der Tiefe H des inneren Behälters (2) größer oder gleich 0,1 und kleiner oder gleich 0,8 ist.

19. Elektrischer Kocher nach Anspruch 1, **dadurch gekennzeichnet, dass** die durchlässige Platte (20) des Dampfkorbes eine ebene oder gekrümmte Struktur aufweist und das Verhältnis zwischen der Höhe H3, die vom niedrigsten Punkt der durchlässigen Platte (20) bis zum oberen Rand des inneren Behälters (2) reicht, und der Tiefe H des inneren Behälters (2) größer oder gleich 0,1 und kleiner oder gleich 0,8 ist.

## Claims

1. Electric cooker comprising a steaming basket which comprises:
- a filling cylinder (10), which filling cylinder (10) comprises a filling chamber (11), and the wall of the bottom (12) of the filling cylinder (10) is provided with an opening mechanism (22),
- installed on the filling chamber (11) is located a permeable plate (20), which permeable plate (20) comprises a permeable zone, which permeable zone is born with several holes for the passage of water (122) which passes through the permeable plate (20), and between said permeable plate (20) and the wall of the bottom (12) of the filling cylinder (10) is located a cavity for the passage of water (21), said opening mechanism (22) and said cavity for the passage of water (21) are connected,
**characterised in that** the electric cooker comprises an outer casing (1), an inner container (2) arranged inside the outer casing (1), the steaming basket being installed inside the inner container (2), the upper portion of the filling cylinder (10) of this steaming basket being hermetically put in contact with the opening of the inner container (2).

2. Electric cooker according to claim 1, **characterised in that** the filling cylinder (10) comprises a braced structure, the permeable plate (20) is supported inside of the filling chamber (11) by this braced structure, and an interval exists between the permeable plate (20) and the wall of the bottom (12), all the holes for the passage of water (122) of the permeable zone are connected to the cavity for the passage of water (21).

3. Electric cooker according to claim 2, **characterised in that** the wall of the filling cylinder (10) comprises:
- a side wall (13),
- the wall of the bottom (12),
- a notched wall (14) intended to connect the side wall (13) to the wall of the bottom (12), which notched wall (14) forms said braced structure and which notched wall (14) comprises an interconnected horizontal cross-section (141) and a vertical cross-section (142), which horizontal cross-section (141) is connected to the bottom of the side wall (13), and the bottom of said vertical cross-section (142) is connected to the wall of the bottom (12), and the permeable plate (20) rests on said horizontal cross-section (141).

4. Electric cooker according to claim 2, **characterised in that** the braced structure is installed projecting over the inner surface of the side wall (13) of the filling cylinder, and the permeable plate (20) is installed on said braced structure.

5. Electric cooker according to claim 1, **characterised in that** the permeable plate (20) has a flat structure or a curved structure.

6. Electric cooker according to claim 5, **characterised in that** the permeable plate (20) has a curved structure, and said permeable plate (20) is installed with a curved side towards or in the direction opposite the wall of the bottom (12).

7. Electric cooker according to claim 1, **characterised in that** the permeable plate (20) comprises a central zone (125) situated at the centre of the permeable plate (20) and a peripheral zone (126) situated around this central zone (125), with a side of the central zone (125) curved in the direction opposite the wall of the bottom (12) and a side of the peripheral zone (125) curved towards the wall of the bottom (12).

8. Electric cooker according to claim 1, **characterised in that** the opening mechanism (22) has a straight tubular shape or a conical shape.

9. Electric cooker according to claim 1, **characterised in that** the opening mechanism (22) is installed on the orifices of the bottom cover (12).

10. Electric cooker according to claim 1, **characterised in that** the ratio of the opening surface S1 of the opening mechanism (22) and the transversal cross-section S of the filling chamber (11) of the filling cylinder (10) is greater than or equal to 0.05 and less than or equal to 1.5.

11. Electric cooker according to claim 10, **characterised in that** the ratio of the opening surface S1 of the opening mechanism (22) and the transversal cross-section S of the filling chamber (11) of the filling cylinder (10) is greater than or equal to 0.3 and less than or equal to 0.8.

12. Electric cooker according to claim 1, **characterised in that** the opening mechanism (22) has an axial symmetry with the orthogonal projection of the permeable plate (20).

13. Electric cooker according to claim 1, **characterised in that** the wall of the bottom (12) has a curved surface, a side of the wall of the bottom (12) being curved in the direction opposite the permeable plate (20) of the filling chamber (11), and the opening mechanism (22) being situated at the geometric centre of the wall of the bottom (12).

14. Electric cooker according to claim 13, **characterised in that** it comprises several reinforcements, which reinforcements are situated on the surface of the side of the wall of the bottom (12) opposite the filling chamber (11) and in the extension of the radius of the wall of the bottom (12), and said reinforcements are situated on either side of the opening mechanism and separate from one another by it.

15. Electric cooker according to claim 1, **characterised in that** the holes for the passage of water (122) are of round, oval, cashew nut or polygonal shape, all the holes being of the same shape or blending several of these shapes.

16. Electric cooker according to claim 1, **characterised in that** a seal (4) is placed between the upper portion of the filling cylinder (10) of the steaming basket and the opening of the inner container (2).

17. Electric cooker according to claim 1, **characterised in that** the ratio between the height H1 going from the opening mechanism (22) of the filling cylinder (10) of the steaming basket to the bottom of the inner container (2) and the depth H of the inner container (2) is greater than or equal to 0.1 and less than or equal to 0.8.

18. Electric cooker according to claim 1, **characterised in that** the permeable plate (20) of the steaming basket has a flat or curved structure, and the ratio between the height H2 going from the opening of the opening mechanism (22) to the lowest point of the permeable plate (20) and the depth H of the inner container (2) is greater than or equal to 0.1 and less than or equal to 0.8.

19. Electric cooker according to claim 1, **characterised in that** the permeable plate (20) of the steaming basket has a flat or curved structure, and the ratio between the height H3 going from the lowest point of the permeable plate (20) to the upper edge of the inner container (2) and the depth H of the inner container (2) is greater than or equal to 0.1 and less than or equal to 0.8.
